# EUROPEAN PATENT SPECIFICATION

(11) **EP 2 696 281 B1**
(45) Date of publication and mention of the grant of the patent: **28.06.2017**
(21) Application number: 12179995.1
(22) Date of filing: 10.08.2012
(51) Int. Cl.: G06F 11/34, G06F 9/44, H04W 4/24, H04L 12/14, H04M 15/00

(54) **Method, system and apparatus for tracking workspace activity**
Verfahren, System und Vorrichtung zum Verfolgen der Arbeitsbereichsaktivität
Procédé, système et appareil de suivi de l'activité de l'espace de travail

(43) Date of publication of application: 12.02.2014
(73) Proprietor: BlackBerry Limited, Waterloo, ON N2K 0A7 (CA)
(72) Inventor: Fyke, Steven, Henry, Waterloo, Ontario N2L 3W8 (CA); Walker, David, Ryan, Waterloo, Ontario N2L 3W8 (CA)
(74) Representative: MERH-IP Matias Erny Reichl Hoffmann Patentanwälte PartG mbB

(56) References cited:
- EP-A1- 1 414 228
- US-A1- 2004 259 525
- US-A1- 2008 318 616

## Description

### FIELD

The specification relates generally to mobile devices, and specifically to a method, system and apparatus for tracking workspace activity.

### BACKGROUND

The evolution of computers is currently quite active in the mobile device environment. It is now well-known to including calendaring, contacts, and messaging functions in mobile devices. More recently, there has been a veritable explosion of the number and type of applications that are configured to the unique form factors and computing environments of mobile devices.

US 2008/318616 A1 discloses a portable communications device which enters a first mode when a call is received and directed to a first device identifier associated with the portable communication device; and enters a second mode when the call is directed to a second device identifier associated with the portable communication device. The first mode provides access to a first set of applications and a first set of user data and the second mode provides a second set of applications and a second set of user data.

### SUMMARY

An aspect of the specification provides a system comprising: a device and a server. Wherein the device comprises a processor, a memory, a communication interface, and a display the processor enabled to: determine when each of two different workspaces are active, the two different workspaces distinguished by one or more of stored data at the memory and applications being associated with one or another of the two different workspaces; store, at the memory, respective times when each of the two different workspaces have become active in association of respective indicators of the two different workspaces; and, transmit, via the communication interface, the respective times that each of the two different workspaces are active and the respective indicator to a server. Wherein the server comprises: a respective processor, and a respective communication interface, the respective processor enabled to: receive, via the respective communication interface the respective times and the respective indicators; once the respective times and respective indicators are received, determine whether activity associated with the device is associated with one of the two different workspaces based on which of the two different workspaces was active when the activity occurred; and, bill respective accounts associated with each of the two different workspaces for the activity.

The processor of the device can be further enabled to determine when each of the two different workspaces is active by determining when at least one respective application associated with a given workspace of the two different workspaces is active.

The processor of the device can be further enabled to determine when each of the two different workspaces is active by determining when a given workspace of the two different workspaces is unlocked and locked, the given workspace being active when unlocked and inactive when locked.

The processor of the device can be further enabled to determine when each of the two different workspaces is active by determining when a representation of a given workspace of the two different workspaces is provided at the display.

The processor of the device can be further enabled to transmit, via the communication interface, the respective times and the respective indicators to the server periodically.

A first workspace of the two different workspaces can be associated with a first billing account and a second workspace of the two different workspaces can be associated with a second billing account.

The processor of the device can be further enabled to receive, via the communication interface, from one or more of the server and a billing server billing data partitioned according to workspace activity, a first billing account associated with a first workspace of the two different workspaces and a second billing account associated with a second workspace of the two different workspaces.

The processor of the device can be further enabled to receive, via the communication interface, from one or more of the server and a billing server, a first set of billing data of a first billing account associated with a first workspace of the two different workspaces and a second set of billing data of a second billing account associated with a second workspace of the two different workspaces.

Another aspect of the specification provides a method comprising: at a device comprising a processor, a memory, a communication interface, and a display, determining, at the processor, when each of two different workspaces are active, the two different workspaces distinguished by one or more of stored data at the memory and applications being associated with one or another of the two different workspaces; storing, at the memory, respective times when each of the two different workspaces have become active in association of respective indicators of the two different workspaces; transmitting, via the communication interface, respective times that each of the two different workspaces are active and the respective indicators to a server; receive, at the server, the respective times and the respective indicators; once the respective times and respective indicators are received at the server, determine, at the server, whether activity associated with the device is associated with one of the two different workspaces based on which of the two different workspaces was active when the activity occurred; and billing respective accounts associated with each of the two different workspaces for the activity.

The method can further comprise determining, at the device, when each of the two different workspaces is active by determining when at least one respective application associated with a given workspace of the two different workspaces is active.

The method can further comprise determining, at the device, when each of the two different workspaces is active by determining when a given workspace of the two different workspaces is unlocked and locked, the given workspace being active when unlocked and inactive when locked.

The method can further comprise determining, at the device, when each of the two different workspaces is active by determining when a representation of a given workspace of the two different workspaces is provided at the display.

The method can further comprise transmitting, via the communication interface, the respective times and the respective indicators to the server periodically.

A first workspace of the two different workspaces can be associated with a first billing account and a second workspace of the two different workspaces can be associated with a second billing account.

The method can further comprise receiving at the device, via the communication interface, from one or more of the server and a billing server billing data partitioned according to workspace activity, a first billing account associated with a first workspace of the two different workspaces and a second billing account associated with a second workspace of the two different workspaces.

The method can further comprise receiving at the device, via the communication interface, from one or more of the server and a billing server, a first set of billing data of a first billing account associated with a first workspace of the two different workspaces and a second set of billing data of a second billing account associated with a second workspace of the two different workspaces.

Yet a further aspect of the specification comprises a computer program product, comprising a computer usable medium having a computer readable program code adapted to be executed to implement a method comprising: at a device comprising a processor, a memory, a communication interface, and a display, determining, at the processor, when each of two different workspaces are active, the two different workspaces distinguished by one or more of stored data at the memory and applications being associated with one or another of the two different workspaces; storing, at the memory, respective times when each of the two different workspaces have become active in association of respective indicators of the two different workspaces; transmitting, via the communication interface, respective times that each of the two different workspaces are active to a server; receive, at the server, the respective times and the respective indicators; once the respective times and respective indicators are received at the server, determine, at the server, whether activity associated with the device is associated with one of the two different workspaces based on which of the two different workspaces was active when the activity occurred; and billing respective accounts associated with each of the two different workspaces for the activity.

### BRIEF DESCRIPTIONS OF THE DRAWINGS

For a better understanding of the various implementations described herein and to show more clearly how they may be carried into effect, reference will now be made, by way of example only, to the accompanying drawings in which:
Fig. 1 depicts a system for tracking workspace activity at a device, according to non-limiting implementations.
Fig. 2 depicts a flowchart of a method for tracking workspace activity, according to non-limiting implementations.
Fig. 3 depicts a sequence at the device of Fig. 1 for implementing the method of Fig. 2, according to non-limiting implementations.
Fig. 4 depicts a continuation of the sequence of Fig. 3, according to non-limiting implementations.
Fig. 5 depicts the system of Fig. 1, with times workspaces were active being transmitted to a server from the device, according to non-limiting implementations.
Fig. 6 depicts billing data generated by the server of Fig. 1 partitioned according to workspace activity, according to non-limiting implementations.
Fig. 7 depicts the system of Fig. 1, with billing data being received at the device, according to non-limiting implementations.
Fig. 8 depicts a flowchart of a method for tracking workspace activity performed at the server of Fig. 1, according to non-limiting implementations.

### DETAILED DESCRIPTION

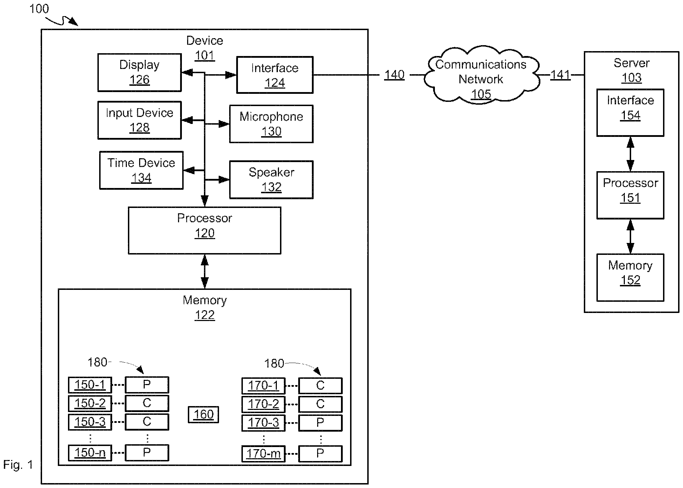

Fig. 1 depicts a system 100 comprising a device 101 for tracking workspace activity, according to non-limiting implementations. System 100 generally comprises device 101 in communication with a server 103 via at least one communications network 105, according to non-limiting implementations. The at least one communications network 105 will be interchangeably referred to hereafter as network 105. Device 101 comprises a processor 120 interconnected with a memory 122, a communications interface 124, a display 126 and an input device 128, optionally a microphone 130 and speaker 132, and a time device 134. It is further appreciated that device 101 communicates with a server 103 via interface 124, a link 140 between device 101 and network 105, and a link 141 between server 103 and network 105. Server 103 generally comprises a processor 151 interconnected with a memory 152 and a communication interface 154, interchangeably referred to hereafter as interface 154.

Device 101 further stores applications 150-1, 150-2, 150-3....150-n at memory 122. Applications 150-1, 150-2, 150-3....150-n will also be referred to hereafter generically as an application 150 and collectively as applications 150. Furthermore, device 101 can store any suitable number of applications 150. Device 101 further stores an application 160 for tracking workspace activity, as described further below.

Device 101 further stores data 170-1, 170-2, 170-3....170-m at memory 122. Data 170-1, 170-2, 170-3....170-m will also be referred to hereafter generically as a set of data 170 and collectively as data 170. Further device 101 can store any suitable amount of data 170.

Each application 150 and each set of data 170 is further associated with an identifier at memory 122 as indicated by tags 180, each tag 180 identifying a respective association between applications 150 and/or data 170 with one of at least two different workspaces. For example, given applications 150 and/or given sets of data 170 associated with a tag "C", as depicted, indicates that the given applications 150 and/or given sets of data 170 are associated with a workspace associated with a corporate environment. Similarly, other given applications 150 and/or other set of data 170 associated with a tag "P" indicates that the other given applications 150 and/or other sets of data 170 are associated with a workspace associated with a personal environment. It is appreciated that the "personal" and "corporate" workspaces described herein, as well as the associated tags "P" and "C", are provided only as examples of a first workspace and a second workspace and are not to be considered particularly limiting. Indeed, the association between each application 150 and each set of data 170 and a given workspace can be made in any suitable manner, including, but not limited to, tags, identifiers, database entries, database categories and the like.

Further, associations between applications 150 and/or data 170 and workspaces can also be provided via the absence of a tag 180 and the like: for example, in some implementations, applications 150 and data 170 associated with a corporate workspace can be tagged with a tag "C", while applications and data 170 associated with a personal workspace can be untagged, the association with a personal workspace (or at least a second workspace that is not the corporate workspace) implicit by the absence of a tag 180.

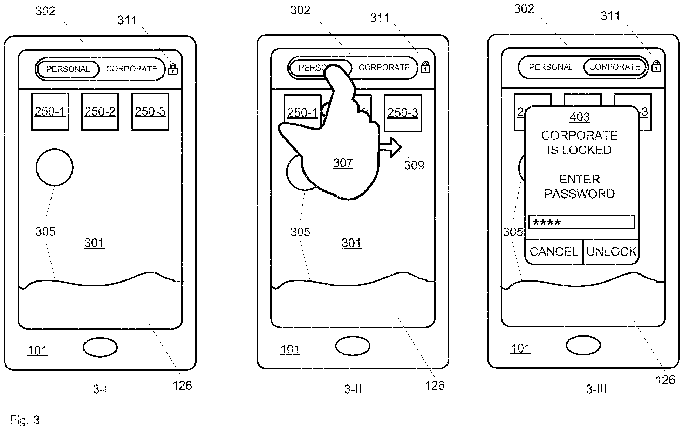

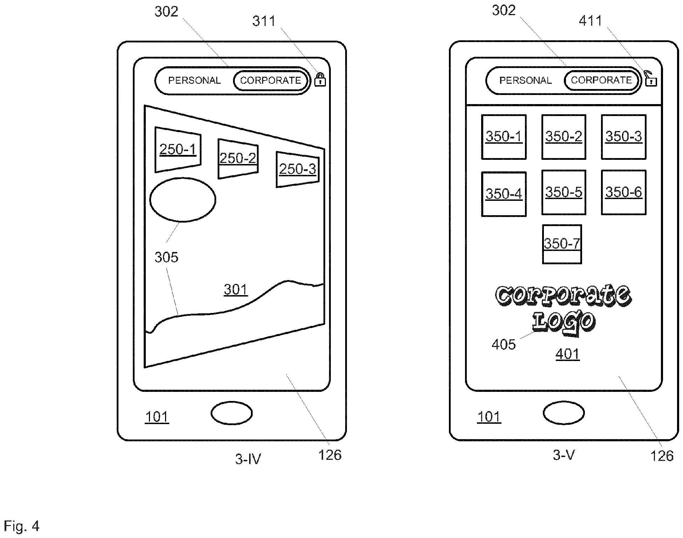

Workspaces will be further described below with reference to Figs. 3 and 4.

Further, workspace can interchangeably referred to as perimeters; for example, present implementations are appreciated to place perimeters around data 170 and applications 150 depending on tag associations, as will presently be explained.

In any event, processor 120 is generally enabled to: determine when each of two different workspaces are active, the two different workspaces distinguished by one or more of stored data 170 at memory 122 and applications 150 being associated with one or another of the two different workspaces; and, transmit, via communication interface 124, respective times that each of the two different workspaces are active to server 103.

Device 101 can be any type of electronic device that can be used in a self-contained manner to process applications 150, 160. Device 101 includes, but is not limited to, any suitable combination of electronic devices, communications devices, computing devices, personal computers, laptop computers, portable electronic devices, mobile computing devices, portable computing devices, tablet computing devices, laptop computing devices, desktop phones, telephones, PDAs (personal digital assistants), cellphones, smartphones, e-readers, internet-enabled appliances and the like. Other suitable devices are within the scope of present implementations.

It is appreciated that Fig. 1 further depicts a schematic diagram of server 103. Server 103 generally comprises a server enabled to manage billing associated with workspaces at device 101, as will be described in more detail below. Server 103 can be based on any well-known server environment including a module that houses one or more central processing units, volatile memory (e.g. random access memory), persistent memory (e.g. hard disk devices) and network interfaces to allow server 103 to communicate over link 141. For example, server 103 can be a Sun Fire V480 running a UNIX operating system, from Sun Microsystems, Inc. of Palo Alto Calif., and having four central processing units (including but not limited to processor 151) each operating at about nine-hundred megahertz and having about sixteen gigabytes of random access memory (including but not limited to memory 152, which can comprise any suitable combination of volatile and non-volatile memory). However, it is to be emphasized that this particular server is merely exemplary, and a vast array of other types of computing environments for server 103 are contemplated. It is further more appreciated that server 103 can comprise any suitable number of servers that can perform different functionality of server implementations described herein. Interface 154 can be implemented as one or more radios and/or connectors and/or network adaptors, configured to communicate with network 105 via link 141. In general, it will be appreciated that interface 154 is configured to correspond with the network architecture that is used to implement link 141, as described below. In other implementations a plurality of links with different protocols can be employed and thus interface 154 can comprise a plurality of interfaces to support each link.

It is yet further appreciated that server 103 can determine activity associated with device 101; for example, server 103 can be in communication with client servers providing services to device 101 including, but not limited to, application servers, telephone servers and/or telephone PBX's (public branch exchanges), internet service provider servers and the like. In other words, server 103 can determine activity at device 101 such that such activity can be billed.

Further, server 103 can be enabled to coordinate activity associated with device 101 with billing for the associated activity, as described in further detail below.

Link 140 comprises any suitable link for enabling device 101 to communicate with network 105. Similarly, link 141 comprises any suitable link for enabling server 103 to communicate with network 105. Links 140, 141 can hence each include any suitable combination of wired and/or wireless links, wired and/or wireless devices and/or wired and/or wireless networks, including but not limited to any suitable combination of USB (universal serial bus) cables, serial cables, wireless links, cell-phone links, cellular network links (including but not limited to 2G, 2,5G, 3G, 4G+, and the like) wireless data, Bluetooth links, NFC (near field communication) links, WiFi links, WiMax links, packet based links, the Internet, analog networks, the PSTN (public switched telephone network), access points, and the like, and/or a combination.

It is appreciated that Fig. 1 further depicts a schematic diagram of device 101 according to non-limiting implementations. It should be emphasized that the structure of device 101 in Fig. 1 is purely an example, and contemplates a device that can be used for both wireless voice (e.g. telephony) and wireless data communications (e.g. email, web browsing, text, and the like). However, while Fig. 1 contemplates a device that can be used for telephony, in other implementations, device 101 can comprise a device enabled for implementing any suitable specialized functions, including but not limited to one or more of telephony, computing, appliance, and/or entertainment related functions.

Device 101 comprises at least one input device 128 generally enabled to receive input data, and can comprise any suitable combination of input devices, including but not limited to a keyboard, a keypad, a pointing device, a mouse, a track wheel, a trackball, a touchpad, a touch screen and the like. Other suitable input devices are within the scope of present implementations. In specific non-limiting implementations described herein, input device 128 comprises a touch screen for receiving touch input data.

Input from input device 128 is received at processor 120 (which can be implemented as a plurality of processors, including but not limited to one or more central processors (CPUs)). Processor 120 is configured to communicate with a memory 122 comprising a non-volatile storage unit (e.g. Erasable Electronic Programmable Read Only Memory ("EEPROM"), Flash Memory) and a volatile storage unit (e.g. random access memory ("RAM")). Programming instructions that implement the functional teachings of device 101 as described herein are typically maintained, persistently, in memory 122 and used by processor 120 which makes appropriate utilization of volatile storage during the execution of such programming instructions. Those skilled in the art recognize that memory 122 is an example of computer readable media that can store programming instructions executable on processor 120. Furthermore, memory 122 is also an example of a memory unit and/or memory module.

In particular, it is appreciated that memory 122 stores application 160, different from applications 150 that, when processed by processor 120, enables processor 120 to: determine when each of two different workspaces are active, the two different workspaces distinguished by one or more of stored data 170 at memory 122 and applications 150 being associated with one or another of the two different workspaces; and, transmit, via interface 124, respective times that each of the two different workspaces are active to server 103.

It is yet further appreciated that applications 150, 160 are examples of programming instructions stored at memory 122.

Processor 120 in turn can also be configured to communicate with a display 126, and optionally a microphone 130 and a speaker 132. Display 126 comprises any suitable one of or combination of CRT (cathode ray tube) and/or flat panel displays (e.g. LCD (liquid crystal display), plasma, OLED (organic light emitting diode), capacitive or resistive touch screens, and the like). When display 126 comprises a touch screen, it is appreciated that display 126 and input device 128 are combined into one apparatus. Microphone 130, when present, comprises any suitable microphone for receiving sound data. Speaker 132, when present, comprises any suitable speaker for providing sound data, audible alerts, audible communications from remote communication devices, and the like, at device 101.

In some implementations, input device 128 and display 126 are external to device 101, with processor 120 in communication with each of input device 128 and display 126 via a suitable connection and/or link.

Processor 120 also connects to interface 124, which can be implemented as one or more radios and/or connectors and/or network adaptors, configured to communicate with network 105 via link 140. In general, it will be appreciated that interface 124 is configured to correspond with the network architecture that is used to implement link 140, as described above. In other implementations a plurality of links with different protocols can be employed and thus interface 124 can comprise a plurality of interfaces to support each link.

In any event, it is appreciated that any suitable combination of interfaces is within the scope of present implementations.

It is yet further appreciated that device 101 comprises time device 134, including but not limited to a clock device, a clock at processor 120, a software-based clock and the like. Regardless of a configuration of time device 134, time device 134 can be use by processor 120 to determine one or more of a time and a date that a given workspace is active.

Further, it should be understood that in general a wide variety of configurations for device 101 are contemplated.

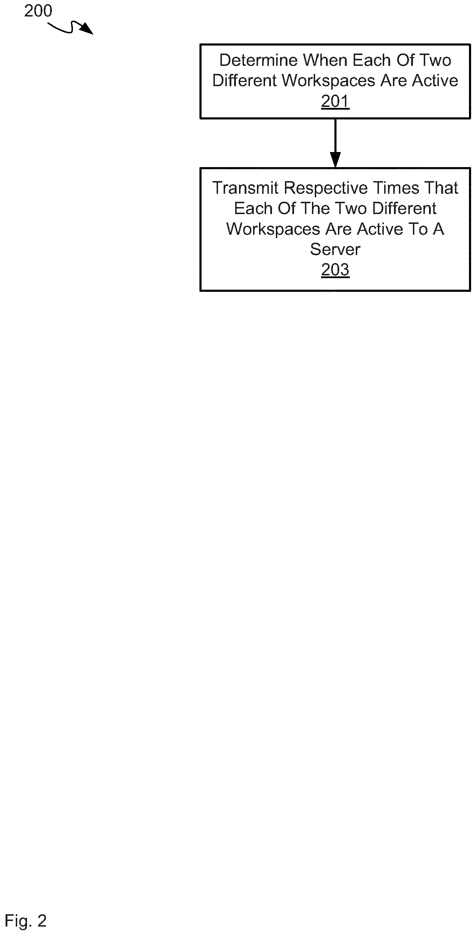

Attention is now directed to Fig. 2 which depicts a flowchart of a method 200 for tracking workspace activity, according to non-limiting implementations. In order to assist in the explanation of method 200, it will be assumed that method 200 is performed using system 100. Furthermore, the following discussion of method 200 will lead to a further understanding of system 100 and its various components. However, it is to be understood that system 100 and/or method 200 can be varied, and need not work exactly as discussed herein in conjunction with each other, and that such variations are within the scope of present implementations.

It is appreciated that, in some implementations, method 200 is implemented in system 100 by processor 120 of device 101. Indeed, method 200 is one way in which device 101 can be configured. It is to be emphasized, however, that method 200 need not be performed in the exact sequence as shown, unless otherwise indicated; and likewise various blocks may be performed in parallel rather than in sequence; hence the elements of method 200 are referred to herein as "blocks" rather than "steps". It is also to be understood, however, that method 200 can be implemented on variations of system 100 as well.

At block 201, processor 120 determine when each of two different workspaces are active, the two different workspaces distinguished by one or more of stored data 170 at memory 122 and applications 150 being associated with one or another of the two different workspaces as described above. At block 203, transmits, via communication interface 124, respective times that each of the two different workspaces are active to server 103.

Method 200 will now be discussed in more detail. At block 201, processor 120 can determine when each of the two different workspaces is active by one or more of:

determining when at least one respective application associated with a given workspace of the two different workspaces is active; determining when a given workspace of the two different workspaces is unlocked and locked, the given workspace being active when unlocked and inactive when locked; and, determining when a representation of a given workspace of the two different workspaces is provided at display 126.

Specifically, block 201 will be discussed with reference to Figs. 3 and 4, which depicts perspective views 3-I, 3-II, 3-III, 3-IV and 3-V provided at display 126 of device 101, in a sequence, according to non-limiting implementations. In the non-limiting example of Figs. 3 and 4, it is assumed that input device 128 and/or display 126 comprises at least a touch screen device. Hence, example implementations will be described with reference to touch input and touch screen events. However, it is appreciated that, in other implementations, other input devices can be used to assist with method 200.

It is further appreciated that each view 3-I, 3-II, 3-III, 3-IV and 3-V each shows graphic user interfaces (GUIs) associated with application 160.

It is yet further appreciated that the concept of workspaces is further illustrated in Figs. 3 and 4, as will presently be described.

View 3-I shows a graphic representation of a first workspace 301 comprising icons 250-1, 250-2, 250-3. Icons 250-1, 250-2, 250-3 will be referred to generically as an icon 250 and collectively as icons 250. It is appreciated that each icon 250 corresponds to an application 150 associated with first workspace 301. First workspace 301 can also be referred to as a "Personal" workspace, as indicated in virtual slider switch 302: in other words, at view 3-I, the text "Personal" is highlighted on slider switch 302.

Further, each icon 250 of first workspace 301 is associated with a respective application 150 which is in turn associated with tags "P" as depicted in Fig. 1. Indeed, in first workspace 301, only those icons 250 associated with applications with tags "P" are provided at workspace 301. When an icon 250 is actuated, for example via a touch screen interaction, the corresponding application 150 will be processed by processor 120 and launched for interaction with a user via display 126 and input device 128.

It is yet further appreciated that processor 120 generally restricts access of applications 150 associated with first workspace 301 to data 170 associated with first workspace 301. In other words, applications 150 associated with first workspace 301 can only access data 170 with tags "P". Access to data 170 associated wither tags "C" is blocked; for example, when a given application 150 associated with first workspace 301 is opened, data 170 associated with tags "C" is not visible to the given application 150. Hence, first workspace 301 can be defined both by a graphic view 3-I in which only those icons 250 associated with applications 150 that are in turn associated with first workspace 301/"Personal" workspace, are provided at display 126. However, first workspace 301 can further be defined by the association of applications 150 and data 170 with tags 180 associated with first workspace 301, as well as the restriction of access to data 170 associated with first workspace 301.

From this perspective, in some implementations, at block 201, processor 120 determines that first workspace 301 is active when one or more of icons 250 is actuated thereby launching an associated application 150 that is, in turn associated, with first workspace 301. For example, icon 250-1 can be actuated (e.g. via touch input). In other words, in these implementations, processor 120 determines that first workspace 301 is active by determining when at least one respective application 150 associated with first workspace 301 is active.

It is further appreciated that processor 120 is further enabled to: manage associations between applications 150, data 170 and first workspace 301; and restrict access to data 170 by applications 150 associated with first workspace 301 based on associations of data 170 with first workspace 301 or a second workspace (e.g. second workspace 401 as described below). Hence, a workspace can also be referred as a perimeter around applications 150 and data 170 associated therewith. Put another way, a perimeter is placed around applications 150 and data 170 based an association with tags "P", such that applications 150 associated with tag "C" cannot access or interact with applications 150 and data 170 associated with tag "P". This prevents cross-contamination of applications 150 and data 170 associated with different tag types.

In any event, view 3-I further shows at least one identifier 305 associated with first workspace 301. It is yet further appreciated that at least one identifier 305 is provided at display 126 only when first workspace 301 is a current and/or active workspace. Hence, at least one identifier 305 comprises a current workspace identifier. When first workspace 301 is no longer a current and/or active workspace, at least one identifier 305 is no longer provided and a current workspace identifier associated with whatever workspace is current is provided: for example see the discussion below with respect to view 3-V.

In any event, it is appreciated that processor 120 provides at least one identifier 305 when first workspace 301 becomes active.

In other words, processor 120 can be further enabled to determine when first workspace 301 is active by determining when a representation of first workspace 301 is provided at the display 126. Hence, when one or more of icons 250, and/or identifier 305 is provided at display 126, processor 120 can determine that first workspace 301 is active.

Attention is next directed to view 3-II, substantially similar to view 3-I but further depicting a finger of a hand 307 interacting with slider switch 302. A touch event is hence detected at display 126 in the area of slider switch 302, in which slider switch 302 is moved from a left hand position, in which text "Personal" is highlighted, to a right hand position, in which text "Corporate" is highlighted. The movement of hand 307 is indicated by arrow 309 indicating that hand 307 is moving from left to right, and in turn moving slider switch 302 from the left hand position to the right hand position.

Views 3-I to 3-III depict a further aspect of workspace management by processor 120, in that one or more of first workspace 301 and a second workspace 401, as described below with reference to Fig. 4, can be locked. For example, as indicated by icon 311, a second workspace 401, associated with a "Corporate" workspace, is locked but can be unlocked by receipt of a password that is requested via a GUI 403, as depicted at view 3-III, GUI 403 provided when processor 120 detects the touch event associated with slider switch 302, described above. It is appreciated that, when a given one of first workspace 301 and second workspace 401 is locked, processor 120 determines that the locked workspace is inactive.

Once password data that matches stored password data is received at GUI 403, processor 120 switches from first workspace 301 to second workspace 401 in any suitable manner. For example, with reference to Fig. 4 and as depicted in view 3-IV, the GUI associated with first workspace 301 can be animated, appearing to flip upside down to show view 3-V depicted in Fig. 4. Indeed, view 3-V depicts second workspace 401 as described hereafter. In other words, the current and/or active workspace changes from first workspace 301 to second workspace 401. Furthermore, once password data is received at GUI 403 that matches stored password data, second workspace 401 is unlocked, as indicated at view 3-V by icon 411; in other words, icon 311 is replaced by icon 411.

It is appreciated that, when second workspace 401 is unlocked, processor 120 determines that second workspace 401 is active. In other words, processor 120 is enabled to determine when second workspace 401 is active by determining when second workspace 401 is unlocked and locked, second workspace 401 being active when unlocked and inactive when locked.

Furthermore, as depicted in view 3-V, a graphical representation of second workspace 401 comprises icons 350-1, 350-2, 350-3, 350-4, 350-5, 350-6, 350-7. Icons 350-1, 350-2, 350-3, 350-4, 350-5, 350-6, 350-7 will be referred to generically as an icon 350 and collectively as icons 350. It is appreciated that each icon 350 corresponds to an application 150 associated with second workspace 401. Second workspace 401 can also be referred to as a "Corporate" workspace, as indicated in virtual slider switch 302: in other words, at views 3-V, the text "Corporate" is highlighted on slider switch 302.

Further, each icon 350 of second workspace 401 is associated with a respective application 150 which is in turn associated with tags "C". Indeed, in second workspace 401, only those icons 350 associated with applications with tags "C" are provided at workspace 301. When an icon 350 is actuated, for example via a touch screen interaction, the corresponding application 150 will be processed by processor 120 and launched for interaction with a user via display 126 and input device 128. Further, when second workspace 401 is unlocked, as described above, icons 350 become accessible via touch events, such that corresponding applications 150 can be accessed. Hence, processor 120 can be further enabled to determine that second workspace 401 is active when an application 150 associated with an icon 350 is active (e.g. an application 150 associated with an icon 350 is launched and the like).

It is yet further appreciated that processor 120 generally restricts access of applications 150 associated with second workspace 401 to data 170 associated with second workspace 401. In other words, applications 150 associated with second workspace 401 can only access data 170 with tags "C".

Hence, second workspace 401 can be defined by view 3-V in which only those icons 350 associated applications 150 that are in turn associated with second workspace 401, are provided at display 126. However, second workspace 401 can further be defined by the association of applications 150 and data 170 with tags 180 associated with second workspace 401, as well as the restriction of access to data 170 associated with second workspace 401. Put another way, a perimeter is placed around applications 150 and data 170 based an association with tags "C", such that applications 150 associated with tag "P" cannot access or interact with applications 150 and data 170 associated with tag "C". This prevents cross-contamination of applications 150 and data 170 associated with different tag types.

Hence, from this perspective, at block 201, processor 120 determines that second workspace 401 is active when one or more of icons 350 is actuated thereby launching an associated application 150 that is, in turn associated, with second workspace 401. For example, icon 350-1 can be actuated (e.g. via touch input). In other words, in these implementations, processor 120 determines that second workspace 401 is active by determining when at least one respective application 150 associated with second workspace 401 is active. First workspace 301 is accordingly determined to be inactive.

It is further appreciated that processor 120 is further enabled to: manage associations between applications 150, data 170 and workspaces 301, 401; and restrict access to data 170 by applications 150 based on mutual associations between applications 150, data 170 and workspaces 301, 401. In other words, processor 120 restricts access of applications 150 associated with first workspace 301 to data 170 associated with first workspace 301, and restricts access of applications 150 associated with second workspace 401 to data 170 associated with second workspace 401. Hence, "Personal" applications 150 cannot access "Corporate" data 170, and "Corporate" applications 150 cannot access "Personal" data 170.

It is further appreciated that once second workspace 401 becomes active, at least one identifier 405 is provided at second workspace 401, at least one identifier 405 associated with second workspace 401.

It is yet further appreciated that at least one identifier 405 is provided at display 126 only when second workspace 401 is a current and/or active workspace. Hence, at least one identifier 405 further comprises a current and/or active workspace identifier. When second workspace 401 is no longer a current and/or active workspace, at least one identifier 405 is no longer provided and an active workspace identifier associated with whatever workspace is current is provided: for example, first workspace 301 again becomes the active workspace and then at least one identifier 305 is again provided at display 126.

In any event, it is appreciated that at block 201, processor 120 provides at least one identifier 405 when first workspace 401 becomes active. In other words, processor 120 can be further enabled to determine when second workspace 401 is active by determining when a representation of second workspace 401 is provided at the display 126. Hence, when one or more of icons 350, and/or identifier 405 is provided at display 126, processor 120 can determine that second workspace 401 is active.

It is yet further appreciated that as second workspace 401 can be locked, second workspace 401 comprises a private workspace. As first workspace 301 is not lockable, first workspace 301 comprises a public workspace. Hence, processor 120 is further enabled to manage the private and public aspects of workspaces 301, 401. In other words, processor 120 is enabled to manage associated passwords and when a lockable workspace is locked or unlocked. For example, in some implementations, second workspace 401 must be unlocked whenever second workspace 401 becomes an active workspace; for example, in view 3-V, second workspace 401 is both active and unlocked, but when slider switch 302 is actuated back to "Personal", and first workspace 301 again becomes active, second workspace 401 is automatically locked and/or relocked and hence becomes inactive.

Alternatively, once second workspace 401 is unlocked, second workspace 401 remains unlocked until a specific command is received at device 101, for example via input device 128, to lock second workspace 401. In yet further implementations, second workspace 401 remains unlocked for a given period of time after touch event associated with second workspace 401; in other words, when second workspace 401 remains unaccessed via input device 128 for a given period of time, second workspace 401 is relocked. Other schemes for locking second workspace 401 are within the scope of present implementations. Further, while present implementations are described with respect to first workspace 301 comprising an unlockable workspace, in other implementations, first workspace 301 can be locked similar to second workspace 401.

In any event, it is appreciated from the discussion of Figs. 3 and 4 that first workspace 301 and second workspace 401 can each become active and inactive. In general, only one of first workspace 301 and second workspace 401 is active at any given time. For example, when second workspace 401 is unlocked and hence becomes active, first workspace 301 becomes in active. Similarly, when processor 120 controls display 126 to provide a representation of first workspace 301, first workspace 301 becomes active regardless of whether second workspace 401 is locked or unlocked, and second workspace accordingly becomes inactive. When rules for which of first workspace 301 and second workspace 401 is active conflict, then processor 120 can be enabled to resolve the conflict. For example, processor 120 can be enabled to determine that the active workspace is the workspace which is currently being rendered at display 126, regardless of other factors.

It is yet further appreciated that each of first workspace 301 and second workspace 401 can be associated with different billing accounts. In other words, activity that occurs when first workspace 301 is active is to be billed to a first billing account and activity that occurs when second workspace 401 is active is to be billed to a second billing account. For example, as first workspace 301 is a personal workspace, activity at first workspace 301 can be billed to a personal billing account and, as second workspace is a corporate account, activity at second workspace 401 can be billed to a corporate billing account. Hence, a corporate entity can issue device 101 to an employee and configure and pay for activity that occurs at second workspace 41, but allow the employee to configure and pay for activity at first workspace 301. As applications 150 and data 170 are kept separate at device 101, each of applications 150 and data 170 associated with a given workspace, activity that occurs at device 101 can be associated with and billed to one or the other of the two billing accounts associated with the respective workspaces.

However, in some implementations, at least one application 150 can comprise a hybrid application that can be accessed from either workspace 301, 401. For example, a telephone application is a non-limiting example of a hybrid application. In these implementations, telephone calls can be billed on the basis of whichever workspace 301, 401 is active when the telephone calls are received and are transmitted, or telephone calls can be billed to a given one of the first billing account and the second billing account. In the latter case, the employee can control when corporate-related telephone calls are received (i.e. corporate-related telephone calls can be received when the personal first workspace 301 is active) hence activity associated with the hybrid telephone application can be billed to the corporate second billing account. Similarly, activity associated with a hybrid email and/or PIM (personal information manager) application can be one of billed on the basis of basis of whichever workspace 301, 401 is active when the activity associated with the hybrid email and/or PIM application occurs or activity associated with the hybrid email and/or PIM application can be billed to a given one of the first billing account or the second billing account.

Hence, in general, for hybrid applications, activity can be billed on the basis of basis of whichever workspace 301, 401 is active when the activity associated with a hybrid application occurs or activity associated with a hybrid application can be billed to a given one of the first billing account or the second billing account.

Regardless of whether an application 150 is associated with first workspace 301, second workspace 401 or a hybrid application, processor 120 is further enabled to determine times when each of first workspace 301 and second workspace 401 become active and/or inactive (for example via time device 134) so that the activity at device 101 can be billed appropriately.

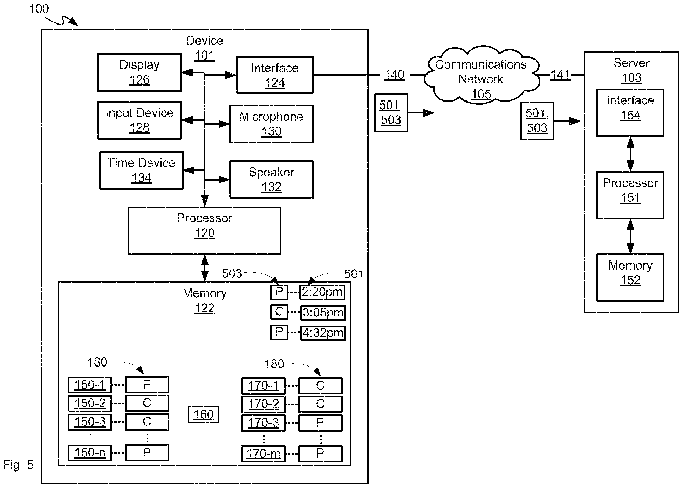

Attention is next directed to Fig. 5, which is substantially similar to Fig. 1, with like elements having like numbers. In Fig. 5, block 201 of method 200 has occurred at least once and processor 120 has stored, at memory 122, times 501 when each of first workspace 301 and second workspace 401 have become active, in association with respective indicators 503 of first workspace 301 and second workspace 401.

For example, in depicted example implementations, an indicator 503 of first workspace 301 is "P", for personal, and an indicator 503 of second workspace 401 is "C" for corporate, similar to tags 180. Further, in the non-limiting example, it is appreciated that at 2:20pm first workspace 301 became active as indicator "P" is associated with time "2:20pm" (and hence correspondingly second workspace 401 became inactive at 2:20pm). Similarly, it is appreciated that at 3:05pm second workspace 401 became active as indicator "C" is associated with time "3:05pm" (and hence correspondingly first workspace 301 became inactive at 3:05pm). Then, at 4:32pm, first workspace 301 again became active as indicator "P" is associated with time "4:32pm" (and hence correspondingly second workspace 401 again became inactive at 4:32pm).

While, in the depicted example implementation, times 501 do not include a date, in other implementations times 501 can include a date. Similarly the format of times 501 and indicators 503 are appreciated to be non-limiting. Times 501 can further comprise a start time when a given workspace became active and an end time when the given workspace became inactive.

Further, the format of indicator 503 is also non-limiting and can include any suitable identifier. Indeed, in some implementations, only one indicator 503 can be stored in association with, for example, a first time 501 as it can be determined that whenever a subsequent time 501 is stored a current workspace become inactive and the other of the two different workspaces became inactive: as long as an indicator 503 of a first active workspace is stored, further indicators 503 can be superfluous.

In any event, with further reference to method 200, regardless of the format of times 501 and indicators 503, at block 203 processor 120 transmits, via communication interface 124, network 105, and links 140, 141, and interface 154, respective times 501 that each of the two different workspaces 301, 401 are active to server 103, as also depicted in Fig. 5. As depicted processor 120 can transmit respective times 501 that each of the two different workspaces 301, 401 are active, with respective identifiers 503 of each of the two different workspaces 301, 401, to server 103.

Further, processor 120 can transmit the respective times 501 one or more of: periodically; when a given workspace of the two different workspaces 301, 401 becomes active; and, when the given workspace becomes inactive.

For example, processor 120 can transmit times 501 on an hourly, daily, and/or monthly basis; regardless, the periodicity of transmission of times 501 can be less than or equal to a billing cycle.

Alternatively, processor 120 can transmit a time 501 that a given workspace becomes active when the given workspace becomes active; hence, a single time 501 is transmitted which can save bandwidth. Similarly, processor 120 can transmit a time 501 that the given workspace becomes inactive when the given workspace becomes inactive, which again can save bandwidth.

Regardless of a format of transmitted times 501 and/or when processor 120 transmits times 501, once server 103 receives times 501, processor 151 (and/or a processor at an associated billing server (not depicted) in communication with server 103) can determine activity associated with device 101 and coordinate activity associated with device 101 with billing for the associated activity. For example, once processor 151 receives times 501 activity associated with device 101 can be determined to be associated with one of first workspace 301 and second workspace 401 was active when the activity occurred.

For example, if a telephone call was received at device 101, processor 151 of server 103 can determine a time of the telephone call from call records received from a telephone server and the like, and determine if the telephone call was received when first workspace 301 was active or if the telephone call was received when second workspace 401 was active, and accordingly bill an associated billing account. In another non-limiting example, one of applications 150 can comprise a stock-market related application associated with first workspace 301; hence, charges for data received by the stock market application when first workspace 301 was active can be billed to a first billing account associated with first workspace 301. Similarly, another application 150 can comprise an enterprise application for accessing data associated with a corporate entity that is in turn associated with second workspace 401; hence, charges for data received by the enterprise application when second workspace 401 was active can be billed to a second billing account associated with second workspace 401.

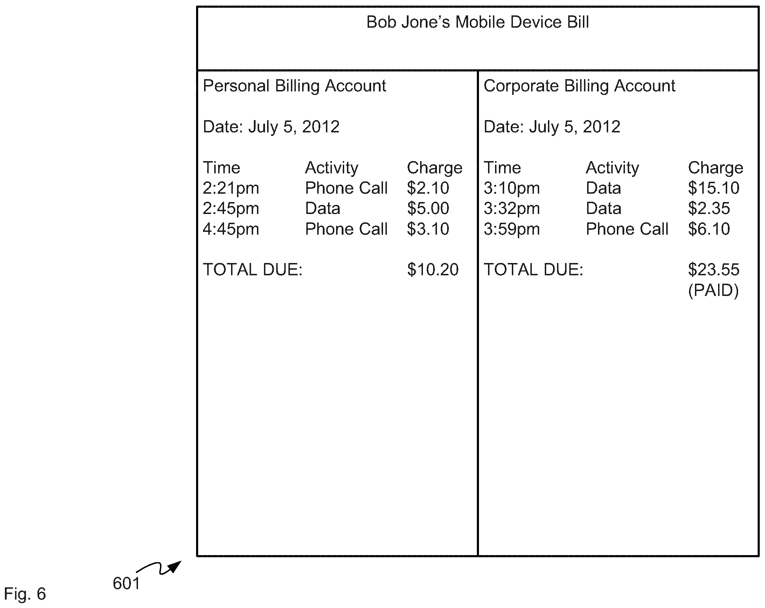

Hence, processor 151 of server 103 (and/or a processor at the associated billing server) can generate billing data associated with each of first workspace 301 and second workspace 401. In some implementations, as depicted in Fig. 6, billing data 601 can be generated that partitioned according to workspace activity, a first billing account associated with first workspace 301 and a second billing account associated with second workspace 401. For example, as depicted in Fig. 6, billing data 601 is partitioned into two columns: a column titled "Personal Billing Account" associated with "Personal" first workspace 301 and a column titled "Corporate Billing Account" associated with "Corporate" second workspace 401. Comparing Figs. 5 and 6, it is appreciated that activity that occurred between 2:20pm and 3:05pm, and activity that occurred after 4:32pm are billed to a "Personal" first billing account associated with "Personal" first workspace 301 as in these time periods first workspace 301 was active. Similarly, activity that occurred between 3:05pm and 4:32pm, are billed to a "Corporate" billing account associated with "Corporate" second workspace 401 as in these time periods second workspace 401 was active. It is further appreciated that billing data 601 indicates that charges associated with the corporate billing account have been paid, for example by the associated corporate entity, but charges associated with the first billing account have not been paid and are to be paid by a user of device 101.

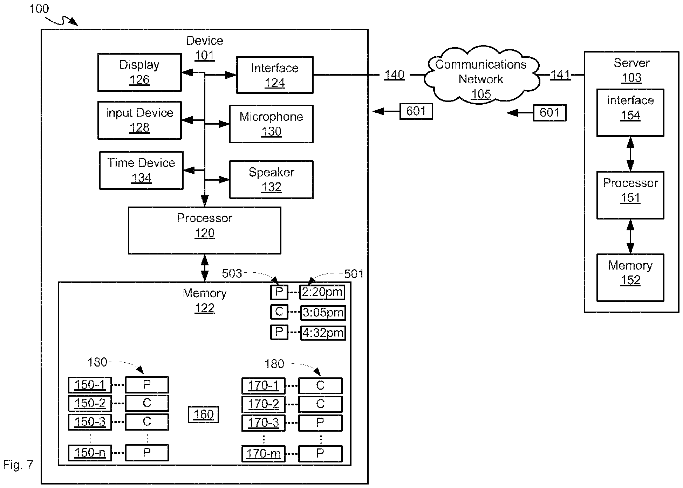

As depicted in Fig. 7, in some implementations, processor 151 of server 103 (and/or a processor at an associated billing server) can transmit an electronic version of billing data 601 to device 101 via interface 154, such that processor 120 receives via interface 124, billing data 601 partitioned according to workspace activity, a first billing account associated with first workspace 301 and a second billing account associated with second workspace 401. As charges associated with the second billing account have been paid by the corporate entity, the charges associated with the corporate billing account are indicated as "Paid".

Alternatively, a paper copy of billing data 601 can be generated and mailed to a user.

In yet further implementations, processor 151 of server 103 can transmit separate sets of billing data to device 101 (and/or a paper copy of same can be mailed to a user): in other words, processor 120 receive a first set of billing data of a first billing account associated with first workspace 301 and a second set of billing data of a second billing account associated with a second workspace 301. Hence, two separate bills are received: one for the personal account and one for the corporate account. In yet further implementations only the personal billing data is transmitted.

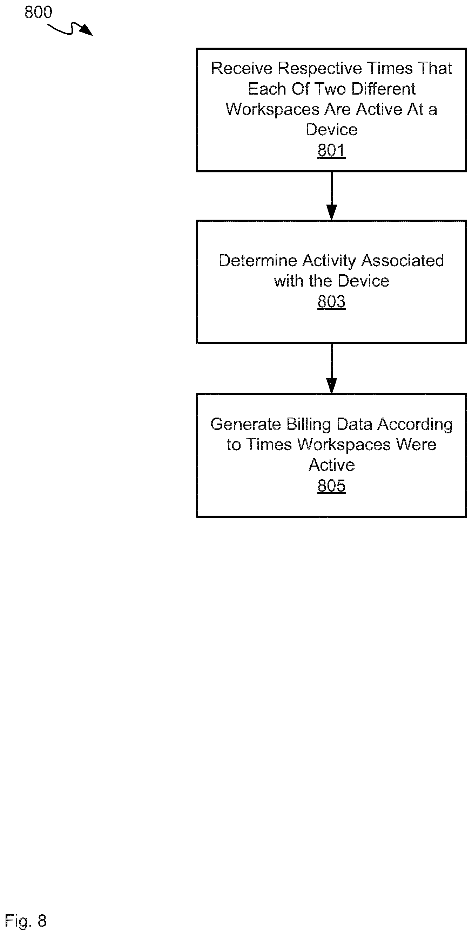

Attention is now directed to Fig. 8 which depicts a flowchart of a method 800 for tracking workspace activity, according to non-limiting implementations. In order to assist in the explanation of method 800, it will be assumed that method 800 is performed using system 100. Furthermore, the following discussion of method 800 will lead to a further understanding of system 100 and its various components. However, it is to be understood that system 100 and/or method 800 can be varied, and need not work exactly as discussed herein in conjunction with each other, and that such variations are within the scope of present implementations.

It is appreciated that, in some implementations, method 800 is implemented in system 100 by processor 151 of server 103. Indeed, method 800 is one way in which server 103 can be configured. It is to be emphasized, however, that method 800 need not be performed in the exact sequence as shown, unless otherwise indicated; and likewise various blocks may be performed in parallel rather than in sequence; hence the elements of method 800 are referred to herein as "blocks" rather than "steps". It is also to be understood, however, that method 800 can be implemented on variations of system 100 as well.

At block 801, processor 151 receives respective times 501 that each of two different workspaces 301, 401 were active at device 101, as depicted in Fig. 5 and described above. At block 803, processor 151 determines activity associated with device 101, for example by receiving activity data from one or more of application servers, telephone servers and/or telephone PBX's (public branch exchanges), internet service provider servers and the like. Activity data can comprise data indicative of activity at device 101 and can generally include an indicator of the activity, and a respective time of the activity, for example an indicator of a telephone call and a time the telephone call occurred at device 101. At block 805, processor 151 generates billing data 601 associated with the determined activity of device 101 according to times workspaces 301, 401 were active, as described above. In some implementations one or more of times 501, billing data 601 and activity data can be stored at memory 152. It is further appreciated that server 103 can determine a cost of an activity, which can be received with the activity data. In other implementations, server 103 can store a table of data costs at memory 152 and generate a cost associated with the activity. However, server 103 can determine a cost of the activity in any suitable manner.

Furthermore, server 103 can access data associated with the first billing account and the second billing account to generate billing data 601. For example, an identifier of device 101 can be received with times 501 and server 103 can determine identifiers of the first billing account and the second billing account via one or more a database, look-up table and the like which associates the identifier of device 101 with the billing accounts.

Hence, server 103 can determine activity at device 101 such that such activity can be billed according when first workspace 301 was active and when second workspace 401 was active, and bill the activity to the respective billing accounts.

In other words, system 100 is configured such that activity associated with first workspace 301 is paid by a user of device 101 and activity associated with second workspace 401 is associated with a corporate entity. As such, user can decide which activity at device is to be billed to which account by controlling which workspace 301, 401 is active when the activity occurs. Hence, device 101 can be issued to an employee of a corporate entity and a system administrator of the corporate entity can cause second workspace 401 to be configured according to corporate policy, and further the corporate entity can pay for activity associated with second workspace 401 (and optionally for activity associated with hybrid applications). The employee can, however, configure first workspace 301 as desired and pay for activity associated with first workspace 301.

Persons skilled in the art will appreciate that there are yet more alternative implementations and modifications possible. For example activity at device 101 is not limited to a single user and device 101 can comprise several accounts associated with different users; activity at device 101 associated with each account can be determined and billed accordingly, in addition to when activity of a given user account is associated with first workspace 301 and second workspace 401.

Those skilled in the art will appreciate that in some implementations, the functionality of device 101 and server 103 can be implemented using pre-programmed hardware or firmware elements (e.g., application specific integrated circuits (ASICs), electrically erasable programmable read-only memories (EEPROMs), etc.), or other related components. In other implementations, the functionality of device 101 and server 103 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever

Persons skilled in the art will appreciate that there are yet more alternative implementations and modifications possible, and that the above examples are only illustrations of one or more implementations. The scope, therefore, is only to be limited by the claims appended hereto.

## Claims

1. A system (100) comprising:
a device (101) and a server (103),
the device (101) comprising:
a processor (120), a memory (122), a communication interface (124), and a display (126), the processor (120) enabled to:
determine when each of two different workspaces are active, the two different workspaces distinguished by one or more of stored data at the memory (122) and applications being associated with one or
another of the two different workspaces;
store, at the memory (122), respective times when each of the two different workspaces have become active in association of respective indicators of the two different workspaces; and, transmit, via the communication interface (124), the respective times that each of the two different workspaces are active and the respective
indicators, to the server (103); and,
the server (103) comprising:
a respective processor (151), and a respective communication interface (154), the respective processor (151) enabled to:
receive, via the respective communication interface (154) the respective times and the respective indicators;
once the respective times and respective indicators are received, determine whether activity associated with the device (101) is associated with one of the two different workspaces based on which of the two different workspaces was active when the activity occurred; and,
bill respective accounts associated with each of the two different workspaces for the activity.

2. The system (100) of claim 1, wherein the processor (120) is further enabled to determine when each of the two different workspaces is active by one or more of:
determining when at least one respective application associated with a given workspace of the two different workspaces is active;
determining when the given workspace of the two different workspaces is unlocked and locked, the given workspace being active when unlocked and inactive when locked; and
determining when a representation of the given workspace of the two different workspaces is provided at the display (126).

3. The system (100) of claim 1 or 2, wherein the processor (120) is further enabled to transmit, via the communication interface (124), the respective times and the respective indicators to the server (103) periodically.

4. The system (100) of any previous claim, wherein a first workspace of the two different workspaces is associated with a first billing account and a second workspace of the two different workspaces is associated with a second billing account.

5. The system (100) of any previous claim, wherein the processor (120) is further enabled to receive, via the communication interface (124), from one or more of the server (103) and a billing server billing data partitioned according to workspace activity, a first billing account associated with a first workspace of the two different workspaces and a second billing account associated with a second workspace of the two different workspaces.

6. The system (100) of any previous claim, wherein the processor (120) is further enabled to receive, via the communication interface (124), from one or more of the server (103) and a billing server, a first set of billing data of a first billing account associated with a first workspace of the two different workspaces and a second set of billing data of a second billing account associated with a second workspace of the two different workspaces.

7. A method comprising:
at a device (101) comprising a processor (120), a memory (122), a communication interface (124), and a display (126), determining, at the processor (120), when each of two different workspaces are active, the two different workspaces distinguished by one or more of stored data at the memory (122) and applications being associated with one or another of the two different workspaces;
storing, at the memory (122), respective times when each of the two different workspaces have become active in association of respective indicators of the two different workspaces;
transmitting, via the communication interface (124), respective times that each of the two different workspaces are active and the respective indicators to a server (103);
receive, at the server (103), the respective times and the respective indicators;
once the respective times and respective indicators are received at the server (103), determine, at the server (103), whether activity associated with the device (101) is associated with one of the two different workspaces based on which of the two different workspaces was active when the activity occurred; and,
billing respective accounts associated with each of the two different workspaces for the activity.

8. The method of claim 7, further comprising determining, at the device (101), when each of the two different workspaces is active by one or more of:
determining when at least one respective application associated with a given workspace of the two different workspaces is active;
determining when the given workspace of the two different workspaces is unlocked and locked, the given workspace being active when unlocked and inactive when locked.
determining when a representation of the given workspace of the two different workspaces is provided at the display (126).

9. The method of claim 7 or 8, further comprising transmitting, via the communication interface (124), the respective times and the respective indicators to the server (103) periodically.

10. The method of any of claims 7 to 9, wherein a first workspace of the two different workspaces is associated with a first billing account and a second workspace of the two different workspaces is associated with a second billing account.

11. The method of any of claims 7 to 10, further comprising receiving at the device (101), via the communication interface (124), from one or more of the server (103) and a billing server billing data partitioned according to workspace activity, a first billing account associated with a first workspace of the two different workspaces and a second billing account associated with a second workspace of the two different workspaces.

12. The method of any of claims 7 to 11, further comprising receiving at the device (101), via the communication interface (124), from one or more of the server (103) and a billing server, a first set of billing data of a first billing account associated with a first workspace of the two different workspaces and a second set of billing data of a second billing account associated with a second workspace of the two different workspaces.

13. A non-transitory computer program product, comprising a computer usable medium having a computer readable program code adapted to be executed to implement a method comprising:
at a device (101) comprising a processor (120), a memory (122), a communication interface (124), and a display (126), determining, at the processor (120), when each of two different workspaces are active, the two different workspaces distinguished by one or more of stored data at the memory (122) and applications being associated with one or another of the two different workspaces;
storing, at the memory (122), respective times when each of the two different workspaces have become active in association of respective indicators of the two different workspaces;
transmitting, via the communication interface (124), respective times that each of the two different workspaces are active and the respective indicators to a server (103);
receive, at the server (103), the respective times and the respective indicators;
once the respective times and respective indicators are received at the server (103), determine, at the server (103), whether activity associated with the device (101) is associated with one of the two different workspaces based on which of the two different workspaces was active when the activity occurred; and,
billing respective accounts associated with each of the two different workspaces for the activity.

## Patentansprüche

1. Ein System (100), das aufweist:
eine Vorrichtung (101) und einen Server (103),
wobei die Vorrichtung (101) aufweist:
einen Prozessor (120), einen Speicher (122), eine Kommunikationsschnittstelle (124) und eine Anzeige (126), wobei der Prozessor (120) befähigt ist zum:
Bestimmen, wann jeder von zwei verschiedenen Arbeitsbereichen aktiv ist, wobei die zwei verschiedenen Arbeitsbereiche durch eines oder mehrere aus gespeicherten Daten in dem Speicher (122) und Anwendungen unterschieden werden, die mit einem oder dem anderen der zwei verschiedenen Arbeitsbereiche assoziiert sind;
Speichern, in dem Speicher (122), von jeweiligen Zeiten, wann jeder der zwei verschiedenen Arbeitsbereiche aktiv wurde, in Assoziation mit jeweiligen Indikatoren der zwei verschiedenen Arbeitsbereiche; und
Übertragen, über die Kommunikationsschnittstelle (124), der jeweiligen Zeiten, wann jeder der zwei verschiedenen Arbeitsbereiche aktiv ist, und der jeweiligen Indikatoren an den Server (103); und
der Server (103) aufweist:
einen jeweiligen Prozessor (151) und eine jeweilige Kommunikationsschnittstelle (154), wobei der jeweilige Prozessor (151) befähigt ist zum:
Empfangen, über die jeweilige Kommunikationsschnittstelle (154), der jeweiligen Zeiten und der jeweiligen Indikatoren;
sobald die jeweiligen Zeiten und die jeweiligen Indikatoren empfangen sind, Bestimmen, ob eine mit der Vorrichtung (101) assoziierte Aktivität mit einem der zwei verschiedenen Arbeitsbereiche assoziiert ist, basierend darauf, welcher der zwei verschiedenen Arbeitsbereiche aktiv war, als die Aktivität stattgefunden hat; und
Stellen einer Rechnung für jeweilige Konten, die mit jedem der zwei verschiedenen Arbeitsbereiche assoziiert sind, für die Aktivität.

2. Das System (100) gemäß Anspruch 1, wobei der Prozessor (120) weiter befähigt ist zum Bestimmen, wann jeder der zwei verschiedenen Arbeitsbereiche aktiv ist, durch eines oder mehrere aus:
Bestimmen, wann zumindest eine jeweilige Anwendung, die mit einem gegebenen Arbeitsbereich der zwei verschiedenen Arbeitsbereiche assoziiert ist, aktiv ist;
Bestimmen, wann der gegebene Arbeitsbereich der zwei verschiedenen Arbeitsbereiche entsperrt und gesperrt ist, wobei der gegebene Arbeitsbereich aktiv ist, wenn er entsperrt ist, und inaktiv ist, wenn er gesperrt ist; und
Bestimmen, wann eine Repräsentation des gegebenen Arbeitsbereichs der zwei verschiedenen Arbeitsbereiche auf der Anzeige (126) vorgesehen ist.

3. Das System (100) gemäß Anspruch 1 oder 2, wobei der Prozessor (120) weiter befähigt ist zum regelmäßigen Übertragen, über die Kommunikationsschnittstelle (124), der jeweiligen Zeiten und der jeweiligen Indikatoren an den Server (103).

4. Das System (100) gemäß einem vorhergehenden Anspruch, wobei ein erster Arbeitsbereich der zwei verschiedenen Arbeitsbereiche mit einem ersten Abrechnungskonto assoziiert ist und ein zweiter Arbeitsbereich der zwei verschiedenen Arbeitsbereiche mit einem zweiten Abrechnungskonto assoziiert ist.

5. Das System (100) gemäß einem vorhergehenden Anspruch, wobei der Prozessor (120) weiter befähigt ist zum Empfangen, über die Kommunikationsschnittstelle (124), von einem oder mehreren des Servers (103) und eines Abrechnungsservers von Abrechnungsdaten, die gemäß einer Arbeitsbereichsaktivität partitioniert sind, wobei ein erstes Abrechnungskonto mit einem ersten Arbeitsbereich der zwei verschiedenen Arbeitsbereiche assoziiert ist und ein zweites Abrechnungskonto mit einem zweiten Arbeitsbereich der zwei verschiedenen Arbeitsbereiche assoziiert ist.

6. Das System (100) gemäß einem vorhergehenden Anspruch, wobei der Prozessor (120) weiter befähigt ist zum Empfangen, über die Kommunikationsschnittstelle (124), von einem oder mehreren des Servers (103) und eines Abrechnungsservers eines ersten Satzes von Abrechnungsdaten eines ersten Abrechnungskontos, das mit einem ersten Arbeitsbereich der zwei verschiedenen Arbeitsbereiche assoziiert ist, und eines zweiten Satzes von Abrechnungsdaten eines zweiten Abrechnungskontos, das mit einem zweiten Arbeitsbereich der zwei verschiedenen Arbeitsbereiche assoziiert ist.

7. Ein Verfahren, das aufweist:
an einer Vorrichtung (101), die einen Prozessor (120), einen Speicher (122), eine Kommunikationsschnittstelle (124) und eine Anzeige (126) aufweist, Bestimmen, an dem Prozessor (120), wann jeder von zwei verschiedenen Arbeitsbereichen aktiv ist, wobei die zwei verschiedenen Arbeitsbereiche durch eines oder mehrere aus gespeicherten Daten in dem Speicher (122) und Anwendungen unterschieden werden, die mit einem oder dem anderen der zwei verschiedenen Arbeitsbereiche assoziiert sind;
Speichern, in dem Speicher (122), von jeweiligen Zeiten, wann jeder der zwei verschiedenen Arbeitsbereiche aktiv wurde, in Assoziation mit jeweiligen Indikatoren der zwei verschiedenen Arbeitsbereiche;
Übertragen, über die Kommunikationsschnittstelle (124), der jeweiligen Zeiten, wann jeder der zwei verschiedenen Arbeitsbereiche aktiv ist, und der jeweiligen Indikatoren an einen Server (103);
Empfangen, an dem Server (103), der jeweiligen Zeiten und der jeweiligen Indikatoren;
sobald die jeweiligen Zeiten und die jeweiligen Indikatoren an dem Server (103) empfangen sind, Bestimmen, an dem Server (103), ob eine mit der Vorrichtung (101) assoziierte Aktivität mit einem der zwei verschiedenen Arbeitsbereiche assoziiert ist, basierend darauf, welcher der zwei verschiedenen Arbeitsbereiche aktiv war, als die Aktivität stattgefunden hat; und
Stellen einer Rechnung für jeweilige Konten, die mit jedem der zwei verschiedenen Arbeitsbereiche assoziiert sind, für die Aktivität.

8. Das Verfahren gemäß Anspruch 7, das weiter ein Bestimmen aufweist, an der Vorrichtung (101), wann jeder der zwei verschiedenen Arbeitsbereiche aktiv ist, durch eines oder mehrere aus:
Bestimmen, wann zumindest eine jeweilige Anwendung, die mit einem gegebenen Arbeitsbereich der zwei verschiedenen Arbeitsbereiche assoziiert ist, aktiv ist;
Bestimmen, wann der gegebene Arbeitsbereich der zwei verschiedenen Arbeitsbereiche entsperrt und gesperrt ist, wobei der gegebene Arbeitsbereich aktiv ist, wenn er entsperrt ist, und inaktiv ist, wenn er gesperrt ist;
Bestimmen, wann eine Repräsentation des gegebenen Arbeitsbereichs der zwei verschiedenen Arbeitsbereiche auf der Anzeige (126) vorgesehen ist.

9. Das Verfahren gemäß Anspruch 7 oder 8, das weiter aufweist ein regelmä-ßiges Übertragen, über die Kommunikationsschnittstelle (124), der jeweiligen Zeiten und der jeweiligen Indikatoren an den Server (103).

10. Das Verfahren gemäß einem der Ansprüche 7 bis 9, wobei ein erster Arbeitsbereich der zwei verschiedenen Arbeitsbereiche mit einem ersten Abrechnungskonto assoziiert ist und ein zweiter Arbeitsbereich der zwei verschiedenen Arbeitsbereiche mit einem zweiten Abrechnungskonto assoziiert ist.

11. Das Verfahren gemäß einem der Ansprüche 7 bis 10, das weiter aufweist ein Empfangen an der Vorrichtung (101), über die Kommunikationsschnittstelle (124), von einem oder mehreren des Servers (103) und eines Abrechnungsservers von Abrechnungsdaten, die gemäß einer Arbeitsbereichsaktivität partitioniert sind, wobei ein erstes Abrechnungskonto mit einem ersten Arbeitsbereich der zwei verschiedenen Arbeitsbereiche assoziiert ist und ein zweites Abrechnungskonto mit einem zweiten Arbeitsbereich der zwei verschiedenen Arbeitsbereiche assoziiert ist.

12. Das Verfahren gemäß einem der Ansprüche 7 bis 11, das weiter aufweist ein Empfangen an der Vorrichtung (101), über die Kommunikationsschnittstelle (124), von einem oder mehreren des Servers (103) und eines Abrechnungsservers eines ersten Satzes von Abrechnungsdaten eines ersten Abrechnungskontos, das mit einem ersten Arbeitsbereich der zwei verschiedenen Arbeitsbereiche assoziiert ist, und eines zweiten Satzes von Abrechnungsdaten eines zweiten Abrechnungskontos, das mit einem zweiten Arbeitsbereich der zwei verschiedenen Arbeitsbereiche assoziiert ist.

13. Nicht-transitorisches Computerprogrammprodukt, das ein computerverwendbares Medium mit einem computerlesbaren Programmcode aufweist, der ausgebildet ist, ausgeführt zu werden, um ein Verfahren zu implementieren, das aufweist:
an einer Vorrichtung (101), die einen Prozessor (120), einen Speicher (122), eine Kommunikationsschnittstelle (124) und eine Anzeige (126) aufweist, Bestimmen, an dem Prozessor (120), wann jeder von zwei verschiedenen Arbeitsbereichen aktiv ist, wobei die zwei verschiedenen Arbeitsbereiche durch eines oder mehrere aus gespeicherten Daten in dem Speicher (122) und Anwendungen unterschieden werden, die mit einem oder dem anderen der zwei verschiedenen Arbeitsbereiche assoziiert sind;
Speichern, in dem Speicher (122), von jeweiligen Zeiten, wann jeder der zwei verschiedenen Arbeitsbereiche aktiv wurde, in Assoziation mit jeweiligen Indikatoren der zwei verschiedenen Arbeitsbereiche;
Übertragen, über die Kommunikationsschnittstelle (124), der jeweiligen Zeiten, wann jeder der zwei verschiedenen Arbeitsbereiche aktiv ist, und der jeweiligen Indikatoren an den Server (103);
Empfangen, an dem Server (103), der jeweiligen Zeiten und der jeweiligen Indikatoren;
sobald die jeweiligen Zeiten und die jeweiligen Indikatoren an dem Server (103) empfangen sind, Bestimmen, an dem Server (103), ob eine mit der Vorrichtung (101) assoziierte Aktivität mit einem der zwei verschiedenen Arbeitsbereiche assoziiert ist, basierend darauf, welcher der zwei verschiedenen Arbeitsbereiche aktiv war, als die Aktivität stattgefunden hat; und
Stellen einer Rechnung für jeweilige Konten, die mit jedem der zwei verschiedenen Arbeitsbereiche assoziiert sind, für die Aktivität.

## Revendications

1. Système (100) comprenant :
un dispositif (101) et un serveur (103) ;
le dispositif (101) comprenant :
un processeur (120), une mémoire (122), une interface de communication (124) et un écran d'affichage (126), le processeur (120) étant configuré pour :
déterminer lorsque chacun des deux espaces de travail différents est actif, les deux espaces de travail différents étant distingués par un ou plusieurs éléments parmi les données stockées dans la mémoire (122) et les applications associées à l'un ou à l'autre des deux espaces de travail différents ;
enregistrer dans la mémoire (122) des instants respectifs auxquels chacun des deux espaces de travail différents a été activé en association avec des indicateurs respectifs des deux espaces de travail différents ; et
émettre vers le serveur (103), via l'interface de communication (124), les instants auxquels chacun des deux espaces de travail différents sont activés et les indicateurs respectifs ; et
le serveur (103) comprenant :
un processeur respectif (151) et une interface de communication respective (154), le processeur respectif (151) étant en mesure de :
recevoir, par l'interface de communication respective (154), les instants respectifs et les indicateurs respectifs ;
après que les instants respectifs et les indicateurs respectifs ont été reçus, déterminer si une activité associée au dispositif (101) est associée à l'un des deux espaces de travail différents, en fonction de celui des deux espaces de travail différents qui était activé lorsque l'activité s'est produite ; et
facturer l'activité sur des comptes respectifs associés à chacun des deux espaces de travail différents.

2. Système (100) selon la revendication 1, dans lequel le processeur (120) est en outre configuré pour déterminer quand chacun des deux espaces de travail différents est activé en utilisant une ou plusieurs des opérations suivantes :
déterminer lorsqu'au moins une application respective est activée, qui est associée à un espace de travail considéré parmi les deux espaces de travail différents ;
déterminer lorsque l'espace de travail considéré, parmi les deux espaces de travail différents, est déverrouillé et verrouillé, l'espace de travail considéré étant activé lorsqu'il est déverrouillé et inactif lorsqu'il est verrouillé ; et
déterminer lorsqu'une représentation de l'espace de travail considéré, parmi les deux espaces de travail différents, est fournie sur l'écran d'affichage (126).

3. Système (100) selon la revendication 1 ou 2, dans lequel le processeur (120) est en outre configuré pour, via l'interface de communication (124), émettre périodiquement les instants respectifs et les indicateurs respectifs vers le serveur (103).

4. Système (100) selon l'une quelconque des revendications précédentes, dans lequel un premier espace de travail, parmi les deux espaces de travail différents, est associé à un premier compte de facturation et dans lequel un second espace de travail, parmi les deux espaces de travail différents, est associé à un second compte de facturation.

5. Système (100) selon l'une quelconque des revendications précédentes, dans lequel le processeur (120) est en outre configuré pour, via l'interface de communication (124), recevoir en provenance d'un ou plusieurs serveurs parmi le serveur (103) et un serveur de facturation, des données de facturation ventilées en fonction de l'activité de l'espace de travail, un premier compte de facturation étant associé à un premier espace de travail parmi les deux espaces de travail différents et un second compte de facturation étant associé à un second espace de travail parmi les deux espaces de travail différents.

6. Système (100) selon l'une quelconque des revendications précédentes, dans lequel le processeur (120) est en outre configuré pour, via l'interface de communication (124), recevoir en provenance d'un ou plusieurs serveurs parmi le serveur (103) et un serveur de facturation, un premier ensemble de données de facturation d'un premier compte de facturation associé à un premier espace de travail parmi les deux espaces de travail différents et un second ensemble de données de facturation d'un second compte de facturation associé à un second espace de travail parmi les deux espaces de travail différents.

7. Procédé comprenant les étapes consistant à :
sur un dispositif (101) comprenant un processeur (120), une mémoire (122), une interface de communication (124) et un écran d'affichage (126), déterminer par le processeur (120) lorsque chacun des deux espaces de travail différents est actif, les deux espaces de travail différents étant distingués par un ou plusieurs éléments parmi les données stockées dans la mémoire (122) et les applications associées à l'un ou à l'autre des deux espaces de travail différents ;
enregistrer dans la mémoire (122) des instants respectifs auxquels chacun des deux espaces de travail différents a été activé en association avec des indicateurs respectifs des deux espaces de travail différents ; et
émettre vers le serveur (103), via l'interface de communication (124), les instants auxquels chacun des deux espaces de travail différents sont activés et les indicateurs respectifs ;
recevoir sur le serveur (103) les instants respectifs et les indicateurs respectifs ;
après que les instants respectifs et les indicateurs respectifs ont été reçus, déterminer sur le serveur (103) si une activité associée au dispositif (101) est associée à l'un des deux espaces de travail différents, en fonction de celui des deux espaces de travail différents qui était activé lorsque l'activité s'est produite ;
facturer l'activité sur des comptes respectifs associés à chacun des deux espaces de travail différents.

8. Procédé selon la revendication 7, comprenant en outre l'étape consistant à déterminer sur le dispositif (101) quand chacun des deux espaces de travail différents est activé en utilisant une ou plusieurs des opérations suivantes :
déterminer lorsqu'au moins une application respective est activée, qui est associée à un espace de travail considéré parmi les deux espaces de travail différents ;
déterminer lorsque l'espace de travail considéré, parmi les deux espaces de travail différents, est déverrouillé et verrouillé, l'espace de travail considéré étant activé lorsqu'il est déverrouillé et inactif lorsqu'il est verrouillé ; et
déterminer lorsqu'une représentation de l'espace de travail considéré, parmi les deux espaces de travail différents, est fournie sur l'écran d'affichage (126).

9. Procédé selon la revendication 7 ou 8, comprenant en outre l'étape consistant à émettre périodiquement, via l'interface de communication (124), les instants respectifs et les indicateurs respectifs vers le serveur (103).

10. Procédé selon l'une quelconque des revendications 7 à 9, dans lequel un premier espace de travail, parmi les deux espaces de travail différents, est associé à un premier compte de facturation et un second espace de travail, parmi les deux espaces de travail différents, est associé à un second compte de facturation.

11. Procédé selon l'une quelconque des revendications 7 à 10, comprenant en outre l'étape consistant à recevoir, via l'interface de communication (124), en provenance d'un ou plusieurs serveurs parmi le serveur (103) et un serveur de facturation, des données de facturation ventilées en fonction de l'activité de l'espace de travail, un premier compte de facturation étant associé à un premier espace de travail parmi les deux espaces de travail différents et un second compte de facturation étant associé à un second espace de travail parmi les deux espaces de travail différents.

12. Procédé selon l'une quelconque des revendications 7 à 11, comprenant en outre l'étape consistant à recevoir sur le dispositif (101), via l'interface de communication (124), en provenance d'un ou plusieurs serveurs parmi le serveur (103) et un serveur de facturation, un premier ensemble de données de facturation d'un premier compte de facturation associé à un premier espace de travail parmi les deux espaces de travail différents et un second ensemble de données de facturation d'un second compte de facturation associé à un second espace de travail parmi les deux espaces de travail différents.

13. Produit programme d'ordinateur non volatil, comprenant un support utilisable par ordinateur portant du code de programme lisible par ordinateur qui est conçu pour être exécuté afin de mettre en oeuvre un procédé comprenant les étapes consistant à :
sur un dispositif (101)- comprenant un processeur (120), une mémoire (122), une interface de communication (124) et un écran d'affichage (126), déterminer par le processeur (120) lorsque chacun des deux espaces de travail différents est actif, les deux espaces de travail différents étant distingués par un ou plusieurs éléments parmi les données stockées dans la mémoire (122) et les applications associées à l'un ou à l'autre des deux espaces de travail différents ;
enregistrer dans la mémoire (122) des instants respectifs auxquels chacun des deux espaces de travail différents a été activé en association avec des indicateurs respectifs des deux espaces de travail différents ;
émettre vers un serveur (103), via l'interface de communication (124), les instants auxquels chacun des deux espaces de travail différents sont activés et les indicateurs respectifs ;
recevoir sur le serveur (103) les instants respectifs et les indicateurs respectifs ;
après que les instants respectifs et les indicateurs respectifs ont été reçus sur le serveur, déterminer sur le serveur (103), si une activité associée au dispositif (101) est associée à l'un des deux espaces de travail différents, en fonction de celui des deux espaces de travail différents qui était activé lorsque l'activité s'est produite ; et
facturer l'activité sur des comptes respectifs associés à chacun des deux espaces de travail différents.
